# EUROPEAN PATENT SPECIFICATION

(11) **EP 1 084 916 B1**
(45) Date of publication and mention of the grant of the patent: **12.11.2003**
(21) Application number: 99118244.5
(22) Date of filing: 14.09.1999
(51) Int. Cl.: B60R 25/02

(54) **Anti-theft device for vehicles or parts of vehicles**
Diebstahlsicherung für Kraftfahrzeuge oder Kraftfahrzeugteile
Dispositif antivol pour véhicule ou parties de véhicules

(43) Date of publication of application: 21.03.2001
(73) Proprietor: TAVOLA S.p.A., 20141 Milano (IT)
(72) Inventor: Maier, Willi, 9496 Balzers (LI)
(74) Representative: La Ciura, Salvatore

(56) References cited:
- WO-A-97/38877
- US-A- 5 555 754
- US-A- 5 619 873
- US-A- 5 782 116

## Description

The present invention relates to an anti-theft device for vehicles or parts of vehicles.

In particular the subject invention relates to an anti-theft device to be applied to cover the steering wheel of a motor vehicle to prevent the theft thereof or just of its parts, such as the protective device called "air-bag", usually located within the central body of the steering wheel.

Known anti-theft devices comprise two distinct half-shells which realise a circular container covering the steering wheel by means of the partial superposition of one in the other. The two half-shells are locked by means of a security lock or even simply by a pivot whereon a key lock is engaged. Application of the anti-theft device to the steering wheel is quite difficult as it requires to compose the container itself by joining the two distinct half-shells which must be manually brought perfectly to collimate before locking the security device. Since the materials involved are meant to prevent breaking and hence have high strength and high specific weight or in any case are constituted by a massive structure, upon mounting or demounting the device they require a considerable effort by the user and they also constitute an element of risk for the safety of the user him/herself in the case of accidental fall of one of the components of the container.

Once stored, the device presents substantially identical size to that of the container in operative position with the additional disadvantage of presenting multiple, physically separate parts if it is stored disassembled, i.e. with the two semi-shells not assembled.

US 5 782 116 discloses a "anti-theft device for vehicles comprising two housing shells for a steering wheel and a locking integral with one of said shells to lock at least housing shell in a closed position so as to define a protective container for the steering wheel, whereby said housing portions are hinged to a same first pivot substantially coaxial with the steering wheel and free to rotate in fan-like fashion around said pivot between an open position for the insertion and extraction of the device itself on and off the steering wheel and said closed position", which corresponds to the preamble of claim 1.

US 5 555 754 discloses "A security device for a vehicle steering wheel, which includes a multi-section rim protection arrangement to shield the rim of the steering wheel. An elogated member is attached to one of the sections for placement across the steering wheel rim, with an extension out from the rim which is long enough to limit rotation of the steering wheel".

WO 97/38877 discloses "a lockable steering wheel cover comprises two or more housing portions pivoted together for relative rotation between a first position in which the housing portions cover the steering wheel and a second position in which the housing portions are nested within one another sufficiently to permit mounting the cover on and removing the cover from the steering wheel. A lock allows the housing portions to be releasably locked in the first portion.

The aim of the present invention is that of providing an improved anti-theft device, which has limited size once stored and which allows easy and quick mounting and demounting operations on and off the steering wheel.

A further aim of the present invention is that of limiting the rotation of the device itself, thereby obtaining a more effective anti-theft device for vehicles.

In accordance with an aspect of the present invention, an anti-theft device is presented as specified in the independent claim. The dependent claims refer to preferred and advantageous embodiments of the invention.

Embodiments of the present invention, provided purely by way of non limiting example, are described below with the aid of the accompanying drawings, wherein:
- Figure 1 shows a perspective top view of the device of the present invention illustrated in its entirety;
- Figure 2 shows a top view of the device of Figure 2;
- Figure 3 shows a detail of the device of Figure 2;
- Figure 4 shows a side view of the device of Figure 2 according to section III-III;
- Figure 5 shows a bottom view of a preferred embodiment of the device of Figure 1;
- Figure 6 shows a particular embodiment of a detail shown in Figure 3;
- Figure 7 shows a particular embodiment of a detail shown in Figure 3; and
- Figure 8 shows a side view of an alternative embodiment of the device of Figure 2 according to section VIII-VIII.

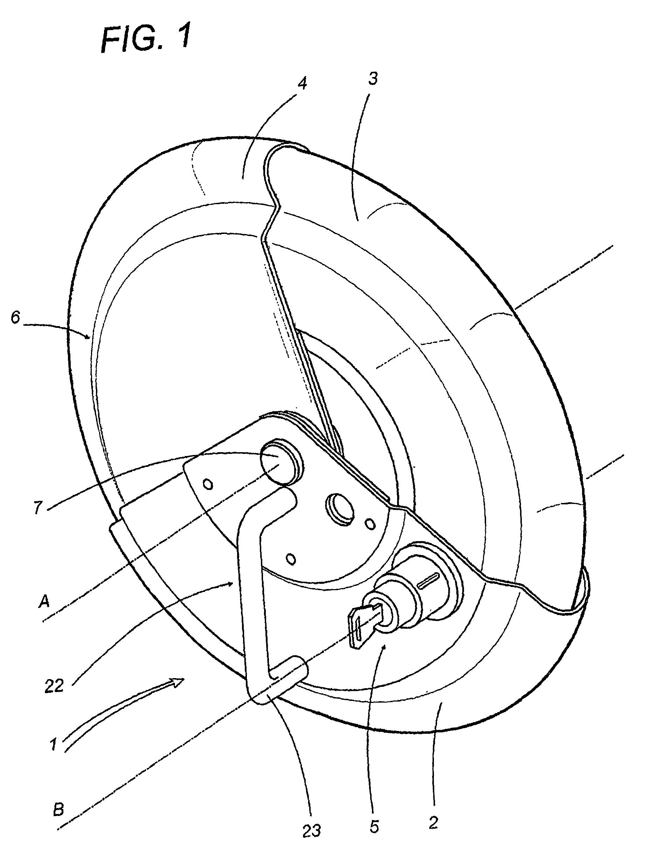

In accordance with the figures of the accompanying drawings, the anti-theft device indicated in its entirety with the reference number 1 in Figure 1, comprises a first portion 2, a second portion 3 and at least an intermediate portion 4 for housing a steering wheel (not shown in the figure) for which the housing portions 2, 3 and 4 define a protective container. The housing portions 2, 3, 4 are pivotingly engaged to the same first pivot 7 having an axis A substantially coinciding, when the device is mounted, with that (not shown in the Figure) of the steering wheel. The portions 2, 3, 4 are free to rotate in fan-like manner around the pivot 7 itself between an open position for the insertion and extraction of the device 1 on and off the steering wheel and a closed position.

In the preferred embodiment shown, the intermediate portion 4 is interposed between the first outer portion 2 and the second inner portion 3.

Locking means 5 are mounted integral to the first housing portion 2 to lock the portions 2, 3, 4 in a closed position for the device 1, preventing the mutual rotation of the portions 2, 3, 4 themselves.

To facilitate the fan-like opening of the housing portions 2, 3, 4 a thruster 8 is provided, mounted between the first portion 2 and the second portion 3.

Alternatively, the thruster 8 can comprise a pneumatic spring, or an electromagnet, or an electric motor (not shown). The latter can be supplied power by batteries housed in the same anti-theft device.

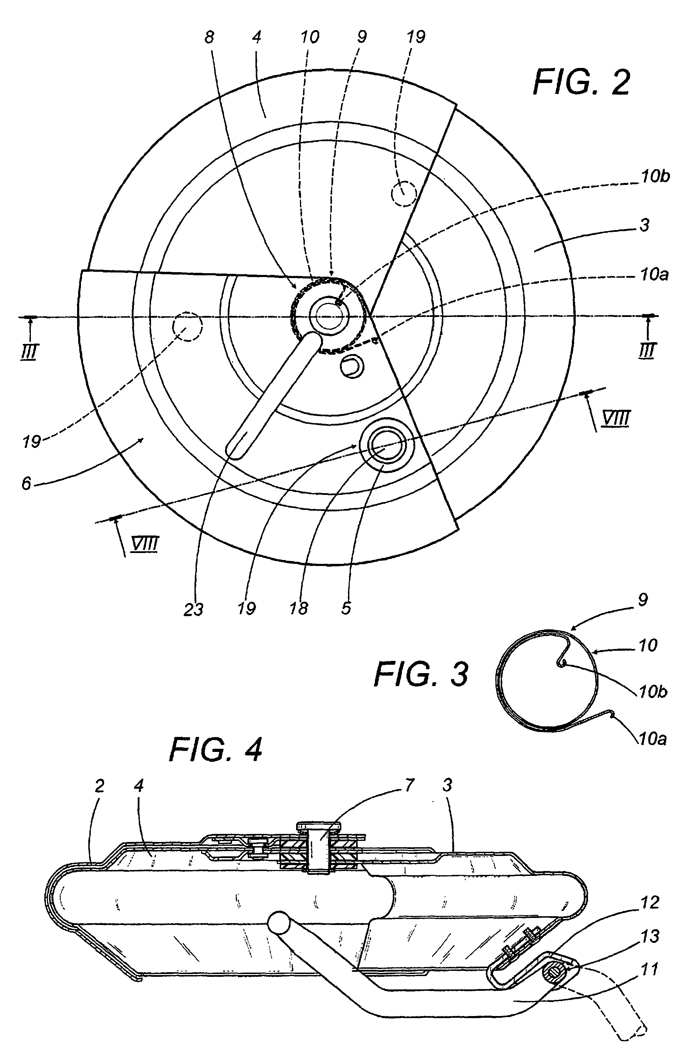

The thruster 8 comprises an elastic element 9 constituted,according to what illustrated in Figures 2, 4, 5, by a flexing spring 10 having a first extremity 10a connected with the first portion 2 and a second extremity 10b connected with the second portion 3.

When mounting the device 1 on the steering wheel, the housing portions 2 and 3 rotate with respect to each other and open in a fan-like manner until reaching the closed position of the steering wheel shown in Figures 1, 2, 5; during this rotation, the flexing spring 10 is loaded. When the device is open, the elastic reaction of the spring 10 favours the folding back in superposition of the housing portions 2, 3 and 4.

An arm 11 projecting, in one of its operative positions, with respect to said container 6 is connected to the second housing portion 3 by means of a support element 12 provided with a hinge 13 with respect whereto the arm 11 is pivotingly engaged. With the device 1 mounted on the steering wheel, the arm 11, in its projecting operative position, is able to engage itself in contact with a fixed part of the vehicle, such as the upper part of the dashboard (not shown in the figure), to limit the rotation of the device 1 as a whole.

The hinge 13 allows the arm 11 to be folded back partially inside the container 6 in a resting position when the device 1 itself is not mounted on the steering wheel; this advantageously reduces the overall size of the device 1.

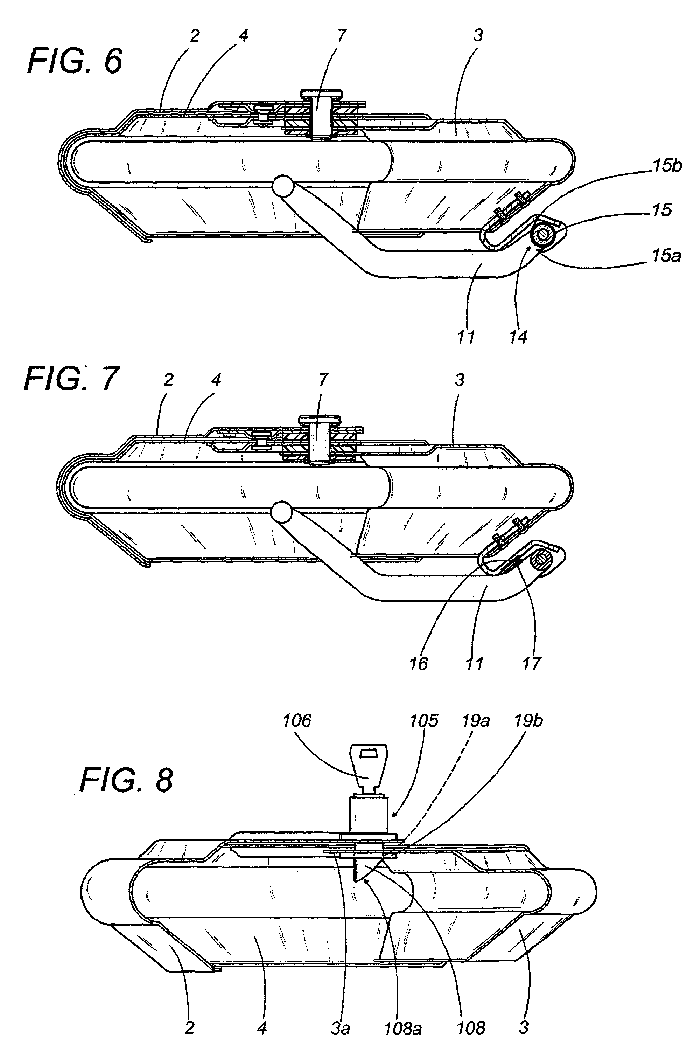

Two different preferred embodiments of the return means 14 for the arm in projecting position are shown in Figures 6 and 7; such return means 14 have also the task of holding the arm 11 stably within the aforesaid resting position. A second elastic element 15 (see Figure 6) presents a first extremity 15a connected with the arm and a second extremity 15b connected with the support element 12; this elastic element 15 is loaded when the arm 11 assumes the projecting position and consequently tends, by effect of its own elastic reaction, to make the arm 11 assume the folded resting position.

In Figure 7, the return means 14 comprise a first magnetic element 16 integral with the support element 12 and consequently also to the second housing portion 3 and a second magnetic element 17 integral to the arm 11. The two magnetic elements 16 and 17 interact magnetically to maintain the arm 11 itself stably in the resting position.

To store the device 1 in a minimum size configuration, when it is not mounted on the steering wheel, an open position of the container 6 is provided, wherein the housing portions 2, 3, 4 are enclosed one inside the other in a fan-like manner; the stable maintenance of this open position is assured by the use of a second pivot 18 such as to prevent the mutual rotation of the aforementioned housing portions 2, 3, 4.

The second pivot 18, shown in Figure 1 included in the lock means 5 and commanded by the same means 5, having an axis B substantially parallel to the first pivot 7, can translate along the axis B itself to be inserted into openings 19 obtained respectively in each of the housing portions 2, 3, 4. The openings 19 are able to be mutually superimposed in the open position and only in this position is it possible to engage the second pivot 18 simultaneously in each of the openings 19.

When the device 1 is in lock position of the steering wheel 1, the second pivot 18 of the lock means 5 blocks the portion 3, getting in the opening 19a made in the same portion 3. For a greater safeness, the opening 19a comprises an reinforcement ring 19b.

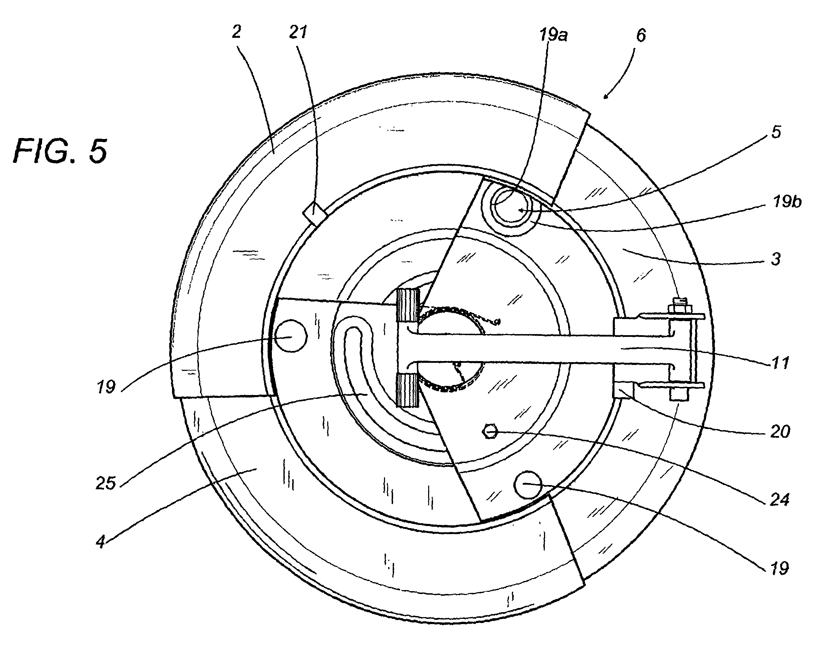

As shown in the embodiment illustrated in Figure 5, alternatively to the second pivot 18, for the stable maintenance of the open position are mounted a third magnetic element 20 integral with the second portion 3 and a fourth magnetic element 21 integral with the first portion 2.

These magnetic elements 20 and 21 are situated in such positions as to be able to move into mutual contact upon reaching the open position with the consequent formation of a magnetic joint able to assure the stable maintenance of the open position for the container 6.

In order easily to transport the device 1 and to facilitate the insertion and extraction of the device 1 itself on the steering wheel, a grip element 22 is mounted integral with the first housing portion 1. In Figure 1 this grip element 22 is constituted by a handle 23.

In order to guarantee an easy mounting of the device 1 on the steering wheel, it is necessary easily and precisely to reach the mutual position of the housing portions 2, 3, 4 wherein the lock means 5 are able to be activated; for this purposes, a strike element 24, integral with the first housing portion 2, is present, which engages with a slot guide 25 obtained in the third housing portion 4 and extends for a circumference sector. The strike element 24 slides within the guide 25 during the fan-like rotation of the housing portions 2, 3, 4 between the closed and the open position of the container 6 and vice versa. The angular extremities of the guide 25 constitute for the mutual rotation of the housing portions 2, 3 and 4, two limit stop points.

In the alternative embodiment shown in Figure 8, the locking means 105 comprise a second locking pivot 108 which presents an inclined extremity 108a. In the action of closing the anti-theft device 1 on the steering wheel, the second portion 3 with one of its edges 3a makes the second pivot 108 recede by sliding on its inclined extremity 108a. In this way, the anti-theft device is closed with no need to activate the locking means 105 and improving ease of employment. Essentially the locking means 105 are closed with a snap-on action; the lock means 105 must be activated with a key 106 only to open the anti-theft device 1.

The invention thus conceived can be subject to numerous modifications and variations, without thereby departing from the scope of the inventive concept according to the claims. Moreover, all components can be replaced with technically equivalent elements.

### LEGEND

- 1: anti-theft device
- 2: first portion (of the anti-theft device)
- 3: second portion
- 3a: edge of the second portion
- 4: intermediate portion
- 5: lock means
- 6: container
- 7: pivot
- 8: thruster
- 9: elastic element
- 10: flexing spring
- 10a: first extremity (of the flexing spring)
- 10b: second extremity (of the flexing spring)
- 11: arm
- 12: support element
- 13: hinge
- 14: return means
- 15: second elastic element
- 15a: first extremity of the second elastic element
- 15b: second extremity of the second elastic element
- 16: first magnetic element
- 17: second magnetic element
- 18: second pivot
- 19: openings
- 19a: opening of portion 3
- 19b: reinforcement ring of opening 19a
- 20: third magnetic element
- 21: fourth magnetic element
- 22: grip element
- 23: handle
- 24: strike element
- 25: guide
- 105: lock means
- 106: key
- 108: second pivot
- 108a: inclined extremity of the second pivot

## Claims

1. Anti-theft device (1) for vehicles or parts of vehicles comprising at least two housing portions (2, 3) for a steering wheel and lock means (5; 105) integral with one of said housing portions (2, 3) to lock at least a first (2) and a second (3) housing portion in a closed position wherein said housing portions define a protective container (6) for the steering wheel, said housing portions (2, 3) being hinged to a same first pivot (7) substantially coaxial with the steering wheel and free to rotate in fan-like fashion around said pivot (7) between an open position for the insertion and extraction of the device (1) itself on and off the steering wheel and said closed position, **characterised in that** it comprises at least a thruster (8) mounted between said first (2) and said second (3) housing portion to bring said housing portions (2, 3) from the closed position to the open position and **in that** it comprises third magnetic elements (20) integral with the first housing portion (2) and fourth magnetic elements (21) integral with the second housing portion and co-operating with said third magnetic elements (20) to lock said housing portions (2, 3, 4) in correspondence with said open position.

2. Anti-theft device (1) according to claim 1, **characterised in that** said thruster (8) comprises at least a first elastic element (9) having a first extremity connected with the first (2) of said housing portions and a second extremity connected with the second (3) of said housing portions.

3. Anti-theft device (1) according to claim 2, **characterised in that** said elastic element (9) comprises at least a flexing spring (10) having a first extremity (10a) connected with the first (2) of said housing portions and a second extremity (10b) connected with the second (3) of said housing portions, said flexing spring (10) being loaded in the closed position.

4. Anti-theft device (1) according to any one of the previous claims, **characterised in that** it comprises an arm (11) projecting with respect to said container (6) connected to one of said housing portions (2, 3, 4) and engageable in contact with at least a fixed part of the vehicle to limit the rotation of the device.

5. Anti-theft device (1) according to claim 4, **characterised in that** it comprises a support element (12) integral with one of said housing portions (2, 3, 4), to said support element (12) being pivotingly engaged the arm (11) to allow the arm (11) itself to be folded from an operative position to a rest position.

6. Anti-theft device (1) according to claim 5, **characterised in that** it comprises return means (14) interposed between said arm (12) and said support (12) of the arm (11) to maintain the arm (11) itself stably in said rest position.

7. Anti-theft device (1) according to claim 6, **characterised in that** said return means (14) comprise a second elastic element (15) having a first end (15a) connected with the arm (11) and a second extremity (15b) connected with said support element (12).

8. Anti-theft device (1) according to claim 6, **characterised in that** said return means (14) comprise a first magnetic element (16) integral with any one of the housing portions (2, 3, 4) and a second magnetic element (17) integral with the arm (11), said first (16) and second (17) magnetic element interacting magnetically to maintain the arm (11) itself in said rest position.

9. Anti-theft device (1) according to any of the previous claims, **characterised in that** said lock means (5; 105) comprise a second pivot (18) having an axis (B) substantially parallel to the first pivot (7) and able to translate along said axis (B) to insert itself in opening (19) obtained respectively in each of said housing portions (2, 3, 4), said openings (19) being able to be mutually superposed in the open position.

10. Anti-theft device (1) according to claim 9, **characterised in that** said lock means (105) comprise a second pivot (108) provided with an inclined extremity (108a) and co-operating with an edge (3a) of the second portion (3) to allow the snapping closure of the anti-theft device (1) itself without having to activate the lock means (105) themselves.

11. Anti-theft device (1) according to any one of the previous claims, **characterised in that** it comprises at least a grip element (22) integral with any one of said housing portions (2, 3, 4) to transport the device (1) and facilitate the insertion and extraction of the device (1) itself on the steering wheel.

12. Anti-theft device (1) according to any one of the previous claims, **characterised in that** it comprises at least a strike element (24) integral with one of said housing portions (2, 3, 4), at least one slot guide (25) extending on one of said housing portions (2, 3, 4) for a circumference sector, said slot guide (25) and said strike element (24) lying on two adjacent housing portions and mutually engaging between said open position and said closed position of the device and vice versa.

## Patentansprüche

1. Diebstahlsicherungsvorrichtung (1) für Fahrzeuge oder Teile von Fahrzeugen, umfassend mindestens zwei Gehäuseteile (2, 3) für ein Lenkrad und als Einheit mit einem der Gehäuseteile (2, 3) ausgebildete Verriegelungsmittel (5; 105), um mindestens ein erstes (2) und ein zweites (3) Gehäuseteil in einer Schließstellung zu verriegeln, in der die Gehäuseteile einen schützenden Behälter (6) für das Lenkrad bilden, wobei die Gehäuseteile (2, 3) im Wesentlichen koaxial mit dem Lenkrad an einem selben ersten Schwenkzapfen (7) angelenkt und in einer fächerartigen Weise zwischen einer Offenstellung zum Aufsetzen und Abnehmen der Vorrichtung selbst auf das und von dem Lenkrad sowie der Schließstellung um den Schwenkzapfen (7) frei drehbar sind, **dadurch gekennzeichnet, dass** sie mindestens eine zwischen dem ersten (2) und dem zweiten (3) Gehäuseteil angebrachte Druckvorrichtung (8) umfasst, um die Gehäuseteile (2, 3) aus der Schließstellung in die Offenstellung zu bringen, und dass sie als Einheit mit dem ersten Gehäuseteil (2) ausgebildete dritte magnetische Elemente (20) und als Einheit mit dem zweiten Gehäuseteil (3) ausgebildete und mit den dritten magnetischen Elementen (20) zusammenwirkende vierte magnetische Elemente (21) umfasst, um die Gehäuseteile (2, 3, 4) in Entsprechung mit der Offenstellung zu arretieren.

2. Diebstahlsicherungsvorrichtung (1) nach Anspruch 1, **dadurch gekennzeichnet, dass** die Druckvorrichtung (8) mindestens ein erstes elastisches Element (9) umfasst, das ein mit dem ersten (2) der Gehäuseteile verbundenes erstes Ende und ein mit dem zweiten (3) der Gehäuseteile verbundenes zweites Ende aufweist.

3. Diebstahlsicherungsvorrichtung (1) nach Anspruch 2, **dadurch gekennzeichnet, dass** das elastische Element (9) mindestens eine Biegefeder (10) umfasst, die ein mit dem ersten (2) der Gehäuseteile verbundenes erstes Ende (10a) und ein mit dem zweiten (3) der Gehäuseteile verbundenes zweites Ende (10b) aufweist, wobei die Biegefeder (10) in der Schließstellung belastet ist.

4. Diebstahlsicherungsvorrichtung (1) nach einem der vorangehenden Ansprüche, **dadurch gekennzeichnet, dass** sie einen in Bezug zu dem Behälter (6) überstehenden Arm (11) umfasst, der mit einem der Gehäuseteile (2, 3, 4) verbunden ist und sich mit mindestens einem feststehenden Teil des Fahrzeugs in Berührungseingriff bringen lässt, um das Drehen der Vorrichtung zu beschränken.

5. Diebstahlsicherungsvorrichtung (1) nach Anspruch 4, **dadurch gekennzeichnet, dass** sie ein als Einheit mit einem der Gehäuseteile (2, 3, 4) ausgebildetes Halteelement (12) umfasst, wobei mit dem Halteelement (12) der Arm schwenkbar im Eingriff steht, um es zu ermöglichen, den Arm (11) selbst aus einer Betriebsstellung in eine Ruhestellung zu klappen.

6. Diebstahlsicherungsvorrichtung (1) nach Anspruch 5, **dadurch gekennzeichnet, dass** sie zwischen den Arm (11) und die Halterung (12) des Arms eingefügte Rückholmittel (14) umfasst, um den Arm (11) selbst stabil in der Ruhestellung zu halten.

7. Diebstahlsicherungsvorrichtung (1) nach Anspruch 6, **dadurch gekennzeichnet, dass** die Rückholmittel (14) ein zweites elastisches Element (15) umfassen, das ein mit dem Arm (11) verbundenes erstes Ende (15a) und ein mit dem Halteelement (12) verbundenes zweites Ende (15b) aufweist.

8. Diebstahlsicherungsvorrichtung (1) nach Anspruch 6, **dadurch gekennzeichnet, dass** die Rückholmittel (14) ein als Einheit mit einem der Gehäuseteile (2, 3, 4) ausgebildetes erstes magnetisches Element (16) und ein als Einheit mit dem Arm (11) ausgebildetes zweites magnetisches Element (17) umfassen, wobei das erste (16) und zweite (17) magnetische Element magnetisch in Wechselwirkung treten, um den Arm (11) selbst in der Ruhestellung zu halten.

9. Diebstahlsicherungsvorrichtung (1) nach einem der vorangehenden Ansprüche, **dadurch gekennzeichnet, dass** die Verriegelungsmittel (5; 105) einen zweiten Schwenkzapfen (18) umfassen, der eine zum ersten Schwenkzapfen (7) im Wesentlichen parallele Achse (B) aufweist und imstande ist, sich entlang der Achse (B) zu bewegen, um sich selbst in eine jeweils in jedem der Gehäuseteile (2, 3, 4) erhaltene Öffnung (19) einzuführen, wobei die Öffnungen (19) in der Offenstellung einander gegenseitig überlagert werden können.

10. Diebstahlsicherungsvorrichtung (1) nach Anspruch 9, **dadurch gekennzeichnet, dass** die Verriegelungsmittel (5; 105) einen zweiten Schwenkzapfen (108) umfassen, der mit einem schrägen Ende (108a) versehen ist und mit einem Rand (3a) des zweiten Teils (3) zusammenwirkt, um das einschnappende Schließen der Diebstahlsicherungsvorrichtung (1) selbst zu ermöglichen, ohne dass die Verriegelungsmittel (105) selbst aktiviert zu werden brauchen.

11. Diebstahlsicherungsvorrichtung (1) nach einem der vorangehenden Ansprüche, **dadurch gekennzeichnet, dass** sie mindestens ein als Einheit mit einem der Gehäuseteile (2, 3, 4) ausgebildetes Griffelement (22) umfasst, um die Vorrichtung (1) zu transportieren und das Aufsetzen und Abnehmen der Vorrichtung (1) selbst auf dem Lenkrad zu erleichtern.

12. Diebstahlsicherungsvorrichtung (1) nach einem der vorangehenden Ansprüche, **dadurch gekennzeichnet, dass** sie mindestens ein als Einheit mit einem der Gehäuseteile (2, 3, 4) ausgebildetes Anschlagelement (24) umfasst, wobei sich mindestens eine Schlitzführung (25) auf einem der Gehäuseteile (2, 3, 4) über einen Umfangsabschnitt erstreckt, wobei die Schlitzführung (25) und das Anschlagelement (24) auf zwei benachbarten Gehäuseteilen liegen und zwischen der Offenstellung und der Schließstellung der Vorrichtung und umgekehrt in gegenseitigem Eingriff stehen.

## Revendications

1. Dispositif antivol (1) pour véhicules ou parties de véhicules comprenant au moins deux parties formant logement (2, 3) pour un volant de direction et des moyens de verrouillage (5 ; 105) formant partie intégrante d'une desdites parties formant logement (2, 3) pour verrouiller au moins une première (2) et une seconde (3) parties formant logement dans une position fermée, dans lequel lesdites parties formant logement constituent une enveloppe protectrice (6) pour le volant de direction, lesdites parties formant logement (2, 3) étant fixées par une charnière à un premier pivot similaire (7) essentiellement coaxial avec le volant de direction et libre de tourner à la manière d'un ventilateur autour dudit pivot (7) entre une position ouverte pour l'installation sur et le retrait du dispositif (1) en lui-même du volant de direction et ladite position fermée, **caractérisé en ce qu'**il comprend au moins un dispositif de poussée (8) monté entre ladite première (2) et ladite seconde (3) parties formant logement pour faire passer lesdites parties formant logement (2, 3) de la position fermée à la position ouverte, et **en ce qu'**il comprend des troisièmes éléments magnétiques (20) formant partie intégrante de la première partie formant logement (2) et des quatrièmes éléments magnétiques (21) formant partie intégrante de la seconde partie formant logement et coopérant avec lesdits troisièmes éléments magnétiques (20) pour verrouiller lesdites parties formant logement (2, 3, 4) dans ladite partie ouverte.

2. Dispositif antivol (1) selon la revendication 1, **caractérisé en ce** ledit dispositif de poussée (8) comprend au moins un premier élément élastique (9) ayant une première extrémité reliée à la première (2) desdites parties formant logement et une seconde extrémité reliée à la seconde (3) desdites parties formant logement.

3. Dispositif antivol (1) selon la revendication 2, **caractérisé en ce que** ledit élément élastique (9) comprend au moins un ressort de flexion (10) ayant une première extrémité (10a) reliée à la première (2) desdites parties formant logement et une seconde extrémité (10b) reliée à la seconde (3) desdites parties formant logement, ledit ressort de flexion (10) étant armé dans la position fermée.

4. Dispositif antivol (1) selon l'une quelconque des revendications précédentes, **caractérisé en ce qu'**il comprend un bras (11) faisant saillie par rapport à ladite enveloppe (6) relié à Tune desdites parties formant logement (2, 3, 4) et pouvant être mis en prise et en contact avec au moins une partie fixe du véhicule pour limiter la rotation du dispositif.

5. Dispositif antivol (1) selon la revendication 4, **caractérisé en ce qu'**il comprend un élément formant support (12) formant partie intégrante d'une desdites parties formant logement (2, 3, 4), pour que le bras (11) soit mis en prise de manière rotative avec ledit élément formant support (12) afin de permettre au bras (11) proprement dit d'être replié d'une position de fonctionnement à une position de repos.

6. Dispositif antivol (1) selon la revendication 5, **caractérisé en ce qu'**il comprend des moyens de retour (14) intercalés entre ledit bras (11) et ledit support (12) du bras (11) pour maintenir le bras (11) en lui-même stable dans ladite position de repos.

7. Dispositif antivol (1) selon la revendication 6, **caractérisé en ce que** lesdits moyens de retour (14) comprennent un second élément élastique (15) ayant une première extrémité (15a) reliée au bras (11) et une seconde extrémité (15b) reliée audit élément formant support (12).

8. Dispositif antivol (1) selon la revendication 6, **caractérisé en ce que** lesdits moyens de retour (14) comprennent un premier élément magnétique (16) formant partie intégrante de l'une des parties formant logement (2, 3, 4) et un second élément magnétique (17) formant partie intégrante du bras (11), lesdits premier (16) et second (17) éléments magnétiques interagissant de manière magnétique afin de maintenir le bras (11) en lui-même dans ladite position de repos.

9. Dispositif antivol (1) selon l'une quelconque des revendications précédentes, **caractérisé en ce que** lesdits moyens de verrouillage (5 ; 105) comprennent un second pivot (18) ayant un axe (B) essentiellement parallèle au premier pivot (7) et pouvant effectuer une translation le long dudit axe (B) pour s'insérer dans l'ouverture (19) obtenue respectivement dans chacune desdites parties formant logement (2, 3, 4), lesdites ouvertures (19) pouvant être mutuellement superposées dans la position ouverte.

10. Dispositif antivol (1) selon la revendication 9, **caractérisé en ce que** lesdits moyens de verrouillage (105) comprennent un second pivot (108) prévu avec une extrémité inclinée (108a) et coopérant avec un bord (3a) de la seconde partie (3) pour permettre la fermeture par encliquetage du dispositif antivol (1) en lui-même sans avoir à activer les moyens de verrouillage (105) en eux-mêmes.

11. Dispositif antivol (1) selon l'une quelconque des revendications précédentes, **caractérisé en ce qu'**il comprend au moins un élément formant poignée (22) faisant partie intégrante de l'une desdites parties formant logement (2, 3, 4) pour transporter le dispositif (1) et faciliter l'installation et le retrait du dispositif (1) en lui-même du volant de direction.

12. Dispositif antivol (1) selon l'une quelconque des revendications précédentes, **caractérisé en ce qu'**il comprend au moins un élément de butée (24) faisant partie intégrante de l'une desdites parties formant logement (2, 3, 4), au moins un guide à fente (25) s'étendant sur l'une desdites parties formant logement (2, 3, 4) pour un secteur circonférentiel, ledit guide à fente (25) et ledit élément de butée (24) se trouvant sur deux parties formant logement adjacentes et étant mises en prise mutuellement entre ladite position ouverte et ladite position fermée du dispositif et *vice versa*.
